(19) Europäisches Patentamt
European Patent Office
Office européen des brevets

(11) **EP 0 804 047 A2**

(12) **EUROPÄISCHE PATENTANMELDUNG**

(43) Veröffentlichungstag:
29.10.1997 Patentblatt 1997/44

(51) Int. Cl.⁶: **H04Q 11/04**

(21) Anmeldenummer: 97101882.5

(22) Anmeldetag: 06.02.1997

(84) Benannte Vertragsstaaten:
AT BE CH DE DK ES FI FR GB GR IE IT LI LU MC
NL PT SE

(30) Priorität: 22.04.1996 DE 19615908

(71) Anmelder: **Deutsche Telekom AG**
**53113 Bonn (DE)**

(72) Erfinder:
• **Habermann, Reinhard, Dr. Ing.**
**64331 Weiterstadt (DE)**
• **Dörken, Heinrich, Dipl.-Ing.**
**64293 Darmstadt (DE)**

(54) **Verfahren zur Messung der Vermittlungsverzögerung**

(57) Bei einem Verfahren zur Messung der Vermittlungsverzögerung in Telekommunikationsnetzen mit asynchronem Transfer-Modus, wobei Informationen enthaltende Zellen an Vermittlungsstellen Vermittlungsverzögerungen erfahren, ist vorgesehen, daß ausgewählte Zellen mit einem Zähler versehen und in gleicher Art wie andere Zellen in Vermittlungsstellen vermittelt und über das Telekommunikationsnetz übertragen werden, daß der Zähler in den Vermittlungsstellen jeweils um einen der Vermittlungsverzögerung entsprechenden Wert heraufgesetzt wird und daß der Zähler nach der Übertragung ausgelesen wird.

Fig.4

EP 0 804 047 A2

**Beschreibung**

Die Erfindung betrifft ein Verfahren zur Messung der Vermittlungsverzögerung in Telekommunikationsnetzen mit asynchronem Transfer-Modus, wobei Informationen enthaltende Zellen an Vermittlungsstellen Vermittlungsverzögerungen erfahren.

Der asynchrone Transfer-Modus (ATM) ist ein flexibles und leistungsfähiges Übermittlungsverfahren, das sich unter anderem für die Realisierung eines Breitband-ISDN eignet. Die Informationen werden dabei in Zellen übertragen, die sich durch eine konstante und relativ geringe Länge (53 Byte) auszeichnen. Diese Zellen bestehen aus einem Kopf von 5 Byte, der unter anderem Adresseninformationen enthält, und aus einem Teil zur Übermittlung von Nutzinformationen. Sie werden im Netz mit sehr hohen Übertragungsraten, von beispielsweise 155 oder 622 Mbit/s, transportiert und vermittelt. Neben den Zellen mit Nutzinformationen werden Betriebs- und Wartungszellen (Operation and Maintenance = OAM) in den Zellstrom eingefügt.

Ein typisches Merkmal von ATM-Vermittlungen ist die Zwischenspeicherung der zu vermittelnden Zellen in FIFO-Wartespeichern der Koppelnetze. Dadurch ergeben sich variable Verzögerungen - Vermittlungsverzögerungen genannt -, die zusätzlich zu konstanten Verzögerungen auftreten. Die konstanten Verzögerungen ergeben sich durch die Leitungslänge bei gegebener Signalausbreitungsgeschwindigkeit auf dem Übertragungsmedium (beispielsweise Glasfaser) und aus Verzögerungen durch Signalverarbeitungsprozesse der Übertragungs- und der Vermittlungstechnik.

Die momentan im Netz auftretende Zellenlaufzeit, die sich aus der Summe aller Konstanten und der Summe der in allen durchlaufenen Vermittlungsstellen aufgetretenen Vermittlungsverzögerungen zusammensetzt, ist ein wichtiger Parameter der Dienstgüte. Eine Überwachung der Vermittlungsverzögerung ist daher in ATM-Telekommunikationsnetzen erforderlich.

Von der Anmelderin wurde mit der deutschen Patentanmeldung 195 27 061 bereits ein Verfahren und eine Vorrichtung zur Messung der Zellenlaufzeit in ATM-Netzen vorgeschlagen. Dabei wird in OAM-Zellen am Beginn ihrer Übertragungsstrecke eine Zeitmarke eingefügt, die am Ende der Übertragungsstrecke ausgelesen und mit der Ist-Zeit verglichen wird. Durch Differenzbildung ist dann eine Messung der gesamten Laufzeit der Zelle möglich, ohne zwischen den konstanten Anteilen der Laufzeit und den Vermittlungsverzögerungen zu unterscheiden.

Aufgabe der vorliegenden Erfindung ist es, ein Verfahren zur Messung der Vermittlungsverzögerung anzugeben, das einfach und zuverlässig arbeitet und mit welchem auftretende Vermittlungsverzögerungen gemessen werden können. Dabei soll die Messung selbst großer Vermittlungsverzögerungen bei einer hohen zeitlichen Auflösung möglich sein.

Diese Aufgabe wird erfindungsgemäß dadurch gelöst, daß ausgewählte Zellen mit einem Zähler versehen und in gleicher Art wie andere Zellen in Vermittlungsstellen vermittelt und über das Telekommunikationsnetz übertragen werden, daß der Zähler in den Vermittlungsstellen jeweils um einen der Vermittlungsverzögerung entsprechenden Wert heraufgesetzt wird und daß der Zähler nach der Übertragung ausgelesen wird.

Bei dem erfindungsgemäßen Verfahren kann der Zähler in Form von einigen dafür reservierten Bytes in verschiedene das Netz durchlaufende Zellen eingesetzt werden. Vorzugsweise ist jedoch vorgesehen, daß die ausgewählten Zellen Betriebs- und Wartungszellen (OAM-Zellen) sind und daß der Zähler innerhalb des funktionsspezifischen Feldes übertragen wird. Eine einfache Möglichkeit zur Aktualisierung des Zählers in der jeweils durchlaufenen Vermittlungsstelle ergibt sich bei einer Weiterbildung des erfindungsgemäßen Verfahrens dadurch, daß der der Vermittlungsverzögerung entsprechende Wert aus der Anzahl von Speicherplätzen, welche die jeweilige ausgewählte Zelle in einer Vermittlungsstelle durchläuft, abgeleitet wird. An sich kann der Zähler die Vermittlungsverzögerung in beliebigen Einheiten darstellen, wobei jedoch sicherzustellen ist, daß die jeweils hinzuaddierten Werte von Vermittlungsstelle zu Vermittlungsstelle in gleichen Einheiten gemessen werden. Dies wird vorzugsweise dadurch sichergestellt, daß die Anzahl der Speicherplätze mit einer Zeittaktperiode der jeweiligen Vermittlungsstelle multipliziert wird.

Je nach Erfordernissen im einzelnen kann der Zähler eine Breite von 16 bit oder 32 bit aufweisen. Zur Durchführung des erfindungsgemäßen Verfahrens innerhalb der Vermittlungsstellen ist vorzugsweise vorgesehen, daß die ausgewählten Zellen mit einem Kennzeichen versehen sind, daß die in einer Vermittlungsstelle eintreffenden Zellen nach dem Kennzeichen abgefragt werden, daß aus den mit dem Kennzeichen eintreffenden Zellen jeweils der Zähler ausgelesen wird, daß aus weiteren Daten der Zellen eine Vermittlungsinformation entnommen wird, nach welcher eine Position in einer Warteschlange und die sich daraus ergebende Vermittlungsverzögerung berechnet werden, daß die Vermittlungsverzögerung dem ausgelesenen Zähler hinzuaddiert wird und daß der somit gewonnene neue Zähler in die Zelle eingeschrieben wird.

Die Bestimmung der Vermittlungsverzögerung ist in Vermittlungsstellen mit Ausgangsspeichern oder Zentralspeichern besonders einfach, da die Position zur Bestimmung ausreicht. Bei Vermittlungsstellen mit Eingangsspeichern muß zusätzlich die Arbeitsweise des Vermittlungsalgorithmus in Betracht gezogen werden.

Das erfindungsgemäße Verfahren kann ferner zur Erfassung der konstanten Verzögerungszeiten in den Vermittlungsstellen verwendet werden, die in der Regel herstellerspezifisch sind. Eine einmal vom Hersteller bestimmte Verzögerungszeit kann als Merkmal der jeweiligen Vermittlungsstelle gespeichert sein - vorzugsweise in ganzen Vielfachen einer Grundwartezeiteinheit G. Dieser Wert kann dann zusätzlich zu der varibalen Verzögerung zum Zählerstand Z hinzuaddiert werden.

Ausführungsbeispiele der Erfindung sind in der Zeichnung anhand mehrerer Figuren dargestellt und in der nachfolgenden Beschreibung näher erläutert. Es zeigt:

Fig. 1    den Inhalt einer OAM-Zelle mit einem für das erfindungsgemäße Verfahren vorgesehenen Zähler,

Fig. 2    eine schematische Darstellung der Aufsummierung mehrerer Vermittlungsverzögerungen,

Fig. 3    eine schematische Darstellung zur Aktualisierung des Zählers innerhalb einer Vermittlungsstelle und

Fig. 4    ein stark vereinfachtes Blockschaltbild einer Vermittlungsstelle eines ATM-Netzes.

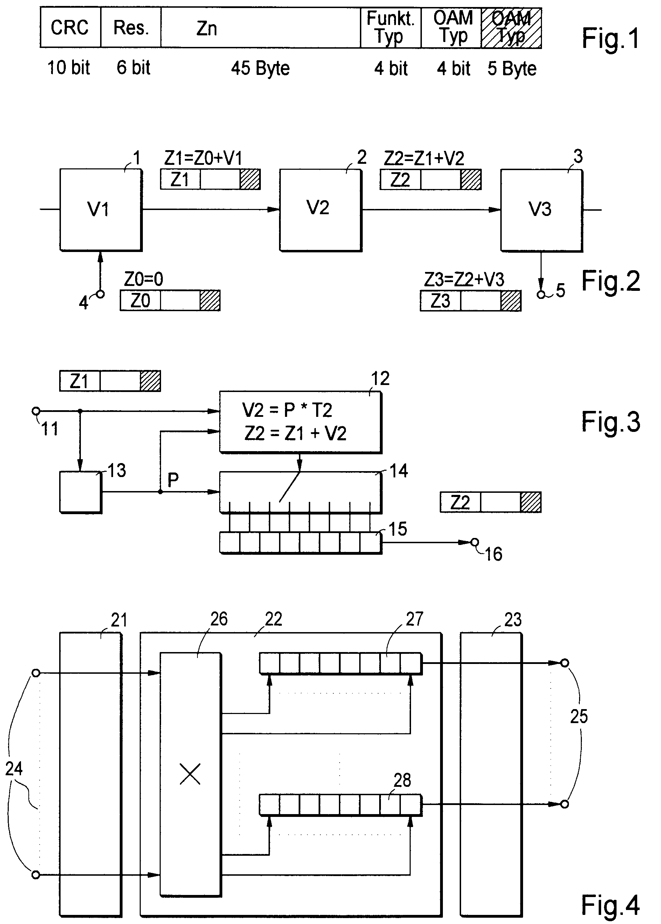

Bekannte OAM-Zellen weisen einen OAM-Kopf von 5 Byte und jeweils vier bit zur Angabe des OAM-Typs und des Funktionstyps auf. 45 Byte sind für die Funktion selbst vorgesehen. Innerhalb dieses Feldes ist bei dem Ausführungsbeispiel der Zähler $Z_n$ für das erfindungsgemäße Verfahren vorgesehen. Schließlich umfaßt die in Fig. 1 dargestellte OAM-Zelle noch 6 bit Reserve und 10 Prüfbits (CRC). Eine solche OAM-Zelle wird im folgenden als Meßzelle bezeichnet.

Fig. 2 stellt einen Ausschnitt aus einem ATM-Netz mit drei Vermittlungsstellen 1, 2, 3 dar, in denen variable Verzögerungen V1, V2 und V3 auftreten. Der ersten Vermittlungsstelle 1 wird bei 4 eine Meßzelle mit einem Zähler $Z_0=0$ zugeführt. Sie gelangt über die weiteren Vermittlungsstellen 2 und 3 zu einem Ausgang 5, an den ein nicht dargestellter Meßplatz angeschlossen ist. Nach dem Durchlaufen der Vermittlungsstelle 1 weist der Zähler den Wert $Z_1=Z_0+V_1$ auf. Entsprechend ist der Zähler Z nach Durchlaufen der Vermittlungsstellen 2 und 3 um V2 und V3 heraufgesetzt. $Z_3$ kann dann ausgelesen werden. Je nach Genauigkeit des Erfordernisses einer statistischen Auswertung sind mehr oder wenig häufig Meßzellen zu übertragen. Dabei ist der störungsfreie Weiterbestand der Nutzverbindungen zu gewährleisten.

Zur Erhöhung des Zählerstandes um die jeweilige Vermittlungsverzögerung innerhalb einer Vermittlungsstelle wird gemäß Fig. 3 die bei 11 eintreffende Meßzelle in einer Prozessoreinheit 12 als solche erkannt. Außerdem wird bei 13 aufgrund der Adresseninformation und der Anzahl der bereits im Wartespeicher befindlichen Zellen eine Position P zum Einschreiben in einen Wartespeicher 15 bestimmt.

Dementsprechend wird ein Demultiplexer 14 gesteuert. Die Position P wird der Prozessoreinheit zugeführt und dort mit dem für diese Vermittlungsstelle typischen Zelltakt T2 multipliziert.

Der Zelltakt wird vorzugsweise in ganzen Vielfachen von einer Grundwartezeiteinheit G ausgedrückt. Durch die Multiplikation ergibt sich die Vermittlungsverzögerung V2 in der Vermittlungsstelle 2, die dann zu dem Zähler Z1, der der ankommenden Meßzelle entnommen wird, hinzuaddiert wird. Das Ergebnis Z2 wird dann wieder in die Meßzelle eingefügt und zusammen mit dieser vom Ausgang 16 zu einer weiteren Vermittlungsstelle oder zu einem Endgerät übertragen.

Die in der Prozessoreinheit 12 durchgeführte Behandlung der Meßzellen benötigt eine zusätzliche konstante Verzögerungszeit. Um eine Verfälschung gegenüber dem übrigen Zellenstrom zu vermeiden, werden alle Zellen durch die Prozessoreinheit geleitet. Damit ist eine Gleichbehandlung bezüglich der konstanten Verarbeitungszeit in der Prozessoreinheit sichergestellt.

Bei einer Breite von 16 bit kann der Zähler maximal 65535 Grundwartezeiteinheiten darstellen. Wird ferner eine Grundwartezeit von 700 ns angenommen, was der ungefähren Zellendauer bei 622 Mbit/s entspricht, so können insgesamt 46 ms Vermittlungsverzögerung erfaßt werden. Aufgrund des im allgemeinen vorhandenen Zusammenhangs der Taktraten von Vermittlungsstellen über Zweierpotenzen einer Grundrate kann bei entsprechender Wahl der Grundwartezeiteinheit G eine sehr hohe Genauigkeit der Meßergebnisse erreicht werden. Die tatsächlichen variablen Laufzeiten sind in diesem Fall exakt ganze Vielfache von G. Falls erforderlich, lassen sich Multiplikationen auf einfache Shift-Operationen abbilden. Sollten diese Voraussetzungen nicht gegeben sein, kann über einen entsprechend kleinen Wert von G eine für den Anwendungszweck völlig hinreichende Genauigkeit problemlos erreicht werden. So können beispielsweise G=0,1 ns und B=32 bit gewählt werden. Der Zähler kann dann bei der zeitlichen Auflösung von 0,1 ns eine Vermittlungsverzögerung bis zu 430 ms darstellen.

Fig. 4 stellt das Blockschaltbild einer Vermittlungsstelle mit Ausgangsspeicherung dar. Von Eingängen 24 werden die zu vermittelnden Signale (ATM-Zellen) über eine Eingangssteuerung 21, ein Koppelnetz 22 und eine Ausgangssteuerung 23 Ausgängen 25 zugeleitet. Das Koppelnetz besteht aus einer Vermittlungseinheit 26, deren Ausgänge mit einer Vielzahl von Ausgangsspeichern verbunden sind, von denen lediglich zwei Ausgangsspeicher 27, 28 dargestellt sind. Zellen, die beispielsweise für den Ausgang des Ausgangsspeicher 27 vorgesehen sind, werden in die nächste freie Position innerhalb des Ausgangsspeichers 27 eingeschrieben. Diese Position kann zur Ermittlung der Vermittlungsverzögerung benutzt werden, wie es im Zusammenhang mit Fig. 3 beschrieben ist.

## Patentansprüche

1.  Verfahren zur Messung der Vermittlungsverzögerung in Telekommunikationsnetzen mit asynchronem Transfer-Modus, wobei Informationen enthaltende Zellen an Vermittlungsstellen Vermittlungsverzögerungen erfahren, dadurch gekennzeichnet,

- daß ausgewählte Zellen mit einem Zähler versehen und in gleicher Art wie andere Zellen in Vermittlungsstellen vermittelt und über das Telekommunikationsnetz übertragen werden,
- daß der Zähler in den Vermittlungsstellen jeweils um einen der Vermittlungsverzögerung entsprechenden Wert heraufgesetzt wird und
- daß der Zähler nach der Übertragung ausgelesen wird.

2. Verfahren nach Anspruch 1, dadurch gekennzeichnet, daß die ausgewählten Zellen Betriebs- und Wartungszellen (OAM-Zellen) sind und daß der Zähler innerhalb des funktionsspezifischen Feldes übertragen wird.

3. Verfahren nach einem der Ansprüche 1 oder 2, dadurch gekennzeichnet, daß der der Vermittlungsverzögerung entsprechende Wert aus der Anzahl von Speicherplätzen, welche die jeweilige ausgewählte Zelle in einer Vermittlungsstelle durchläuft, abgeleitet wird.

4. Verfahren nach Anspruch 3, dadurch gekennzeichnet, daß die Anzahl der Speicherplätze mit einer Zeittaktperiode der jeweiligen Vermittlungsstelle multipliziert wird.

5. Verfahren nach einem der vorhergehenden Ansprüche, dadurch gekennzeichnet, daß der Zähler eine Breite von 16 Bit aufweist.

6. Verfahren nach einem der Ansprüche 1 bis 4, dadurch gekennzeichnet, daß der Zähler eine Breite von 32 Bit aufweist.

7. Verfahren nach einem der vorhergehenden Ansprüche, dadurch gekennzeichnet, daß die ausgewählten Zellen mit einem Kennzeichen versehen sind, daß die in einer Vermittlungsstelle eintreffenden Zellen nach dem Kennzeichen abgefragt werden, daß aus den mit dem Kennzeichen eintreffenden Zellen jeweils der Zähler ausgelesen wird, daß aus weiteren Daten der Zellen eine Vermittlungsinformation entnommen wird, nach welcher eine Position in einer Warteschlange und die sich daraus ergebende Vermittlungsverzögerung berechnet werden, daß die Vermittlungsverzögerung dem ausgelesenen Zähler hinzuaddiert wird und daß der somit gewonnene neue Zähler in die Zelle eingeschrieben wird.

8. Verfahren nach einem der vorhergehenden Ansprüche, dadurch gekennzeichnet, daß in den Vermittlungsstellen dem Zähler jeweils ein Wert hinzuaddiert wird, der einer konstanten Verzögerung in der jeweiligen Vermittlungsstelle entspricht.

| CRC | Res. | Zn | Funkt. Typ | OAM Typ | OAM Typ |
|-----|------|-----|-----------|---------|---------|
| 10 bit | 6 bit | 45 Byte | 4 bit | 4 bit | 5 Byte |

Fig.1

Fig.2

$Z1=Z0+V1$

$Z2=Z1+V2$

$Z0=0$

$Z3=Z2+V3$

Fig.3

$Z1$

$V2 = P * T2$
$Z2 = Z1 + V2$

$Z2$

P

Fig.4